# EUROPEAN PATENT SPECIFICATION

(11) **EP 0 427 800 B1**
(45) Date of publication and mention of the grant of the patent: **02.05.1997**
(21) Application number: 90903280.7
(22) Date of filing: 31.01.1990
(51) Int. Cl.: H04M 1/24, H04M 3/30

(54) **INTERLOCK CIRCUIT FOR PREVENTING CORRUPTION OF TELEPHONE LINE SIGNALS**
VERRIEGELUNGSSCHALTUNG ZUR VORBEUGUNG DES STÖRENS VON FERNSPRECHERLINIENSIGNALEN
CIRCUIT DE VERROUILLAGE EMPECHANT LE BROUILLAGE DES SIGNAUX SUR LES LIGNES TELEPHONIQUES

(30) Priority: 28.04.1989 US 344401
(43) Date of publication of application: 22.05.1991
(73) Proprietor: HARRIS CORPORATION, Melbourne Florida 32912 (US)
(72) Inventor: BENJAMIN, Dean, L., Ventura, CA 93004 (US); WONG, Wayne, K., Camarillo, CA 93010 (US)
(74) Representative: Wilhelm & Dauster Patentanwälte European Patent Attorneys
(86) International application number: US9000602
(87) International publication number: WO9013959

(56) References cited:
- DD-C- 204 819
- US-A- 3 770 912
- US-A- 4 707 851
- US-A- 4 777 645
- PATENT ABSTRACTS OF JAPAN vol. 10, no. 46 (E-383)(2103) 22 February 1986 & JP-A-60 200 659
- PATENT ABSTRACTS OF JAPAN vol. 6, no. 123 (E-117)8 July 1982 & JP-A-57 052 255

## Description

The present invention relates to telephone line test circuits and is particularly directed to a lock-out interface circuit for preventing the connection of a telephone test set to a line to be tested from interfering with data traffic present on the line.

In the course of maintenance and repair of telephone line circuits it is common practice for the craftsperson to couple a test set to the line, monitor the line for the presence of audible traffic and, in the absence of a detectable audio signal, place the test set in a low impedance "TALK" mode in order to use, test, or otherwise carry out communication capability tasks on the accessed circuit. If, during this procedure, the telephone line is carrying information signals (e.g. digital data traffic) that lie in a frequency range above the audio spectrum, the craftsperson will be unable to detect the transmission. As a consequence, when the craftsperson seizes the line, (by placing a low impedance across its tip and ring leads) there is the likelihood of contamination of the out-of-band digital data. Moreover, with conventional test sets it is possible to be in the low impedance mode at the time of connection to the circuit thereby interfering with all traffic which might be present.

In US-patent No. 4,777,645 a telephone line test and display circuit is disclosed which allows a craftsperson to connect a display unit to a line and to determine what types of signals, if any, are present on the line. To this aim a frequency discriminator display unit is used which has different coloured lights associated with different frequency bands. These lights provide an indication to the craftsperson of what types of signals are present on the line.

In laid-open publication JP 60-200659 (A) a self-diagnosing system of terminal equipment is shown including a start deciding part within a control part for deciding whether a self-diagnosing part can be started or not, and also a timer part for measuring a continuous time of a no-communication state is added to a data transmitting and receiving part. The start deciding part starts the self-diagnosing part only in case a startable signal is transferred from the timer part, and also a test key is operated. With this system the corresponding terminal equipment, but not a communication line, can be tested during periods in which no data is transmitted and received by this terminal equipment through a corresponding data line.

In patent publication DD 204 819 an assembly for controllably coupling a telephone line to line test equipment is disclosed in which a separate test lead of an internal connection line including additionally two telephone line leads is used to indicate the current status of the telephone line, i.e. whether the telephone line leads of the internal connection line are currently used for a telephone communication with a subscriber terminal unit. The line test equipment used in this arrangement is controllably coupled to the telephone line leads as well as to the test lead so that it is connected to the telephone line leads simultaneously with disconnecting the subscriber line whenever a corresponding potential exists on the test lead.

It is the technical problem of the invention to provide for an interface circuit for, and a method of, controllably coupling a telephone line to line test equipment with which it is possible to couple such line test equipment without impairing audio signal telephone communication as well as any out-of-audio digital data communication signals transmitted over the telephone line.

This problem is solved by an interface circuit having the features of independent claim 1, and by a method according to claim 14.

In accordance with the present invention, the potential for corruption of any communication signals present on the telephone line by the connection by the direct interfacing of a craftsperson's test equipment to the line is obviated by a protective interlock circuit, which prevents the test set from seizing the line if data traffic is present. To this end the present invention is particularly directed to an interface circuit that is coupled between the telephone line circuit to be accessed (e.g. tip and ring leads) and the craftsperson's test equipment for controllably coupling a telephone line to line test equipment. The interface circuit includes a multiple band frequency detector, which is coupled to the telephone line and, when enabled by the operation of a first switch, monitors the line for the presence of communication signals lying within a prescribed plurality of (in and out-of-audio) frequency bands. Operation of the first switch also provides a timing pulse to a combinational logic circuit to which multiple outputs of the frequency detector are coupled. Should the detector identify any traffic within its sensitivity range (out-of-audio) during the interval of the timing pulse, the logic level on an output to the combinational logic will change state and prevent the generation of a test set enabling signal. The test set enabling signal is normally coupled to a 'line-seize' transistor circuit within the test set, so that, without this enabling signal, the craftsperson is effectively locked-out from the line and data traffic cannot be corrupted. Should the frequency detector not have produced a detection signal after the expiration of the timing pulse, the combinational logic circuit and an associated flip-flop generate an output signal for enabling the test equipment to seize the line. The flip-flop remains set and the logic level of the output signal is maintained until the line is no longer seized by the test equipment, or power is reset. Through the front end comparator circuitry, the interface circuit of the present invention ensures that the test set or other test equipment is always in the high impedance (on-hook) mode upon connection to the line. The flip-flop is reset with each on-hook condition, physical disconnection, or power-on condition.

The front-end frequency detector and associated logic may be coupled to the telephone line through an auxiliary relay circuit through which other test equipment may be coupled to the line in response to the output signal. The interface circuit may also be provided with a second switch that is logically coupled with the output (timing pulse) of the first switch, for providing a manual override or bypass of the frequency detector, thereby permitting the craftsperson the ability to gain 'hard' access to the line regardless of the presence of traffic.

### BRIEF DESCRIPTION OF THE DRAWINGS:

Figure 1 is a diagrammatic illustration of a first embodiment of the interlock circuit of the present invention; and
Figure 2 diagrammatically illustrates a second embodiment of the invention.

### DETAILED DESCRIPTION:

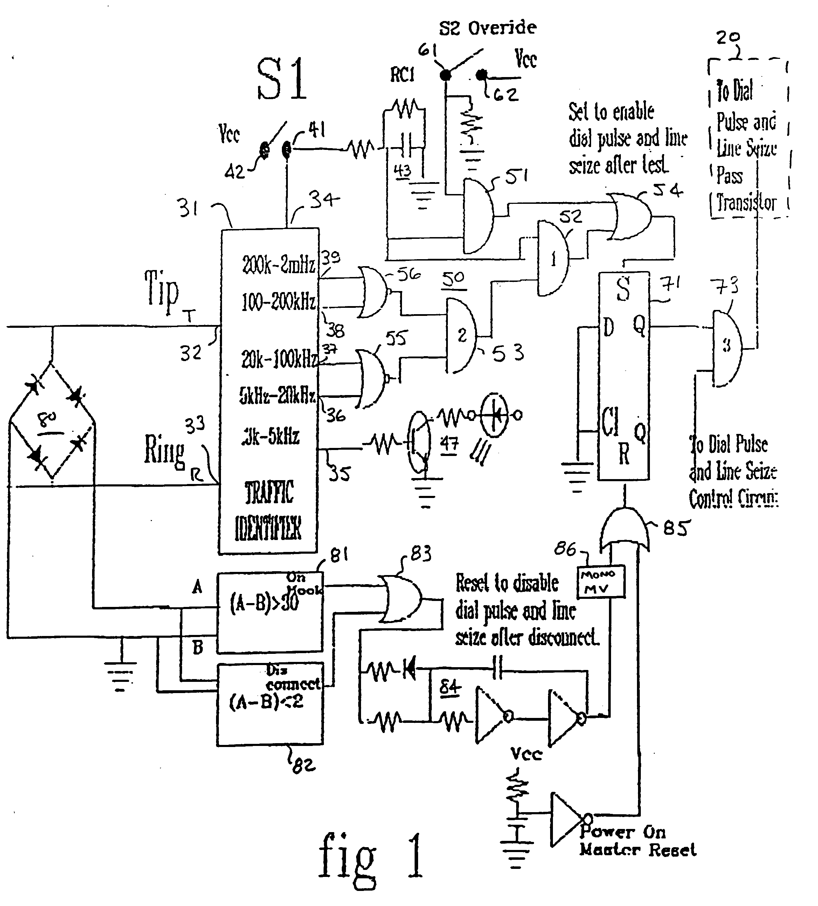

Referring now to Figure 1, there is shown a diagrammatic illustration of a first embodiment of the interlock circuit of the present invention and the manner in which it is interfaced between a telephone line circuit, shown generally at 10, and downstream test set circuitry, shown at 20, through which a craftsperson may perform tasks on the line. Specifically, the front end component of the interlock circuit comprises a multifrequency detector 31 input ports 32 and 33 of which are is coupled to the respective tip (T) and ring (R) leads of line circuit 10 and an enable port 34 of which is coupled to a terminal 41 of a momentary switch Sl. When closed, switch S1 couples a voltage (Vcc) supplied to a terminal 42 to port 34 and to a resistor-capacitor timing pulse generation circuit 43, which supplies a delay (timing) pulse to a first input of each of AND gates 51 and 52 within a combinational logic circuit 50. A second input of AND gate 51 is coupled to terminal 62 of a second momentary switch S2. When closed, switch S2 couples the voltage (Vcc) that is applied to terminal 62 to gate 51. The output of AND gate 51 is coupled to one input of an OR gate 54, the output of which is coupled to the SET input of flip-flop 71.

Frequency detector 31 may be formed in the manner of the frequency discriminator detector unit described in U.S. Patent No. 4,777,645 entitled "Telephone Line Test and Display Circuit", issued Oct. 11, 1988 and assigned to the assignee of the present application. Unit 31 preferably contains a plurality of frequency discriminator circuits tuned to respective bands or ranges of frequencies (e.g. 300Hz-5kHz, 5kHz-20kHz, 20kHz-100kHz, 100kHz-200kHz and 100kHz-2MHz) and outputs of which are coupled over output lines 35-39. Like the unit described in the patent, all of the output lines, of which output line 35 is typical, provide an indication of the presence of signals in that range, via a visual display (e.g. LED circuit 47). The remaining output lines 36-39 are additionally coupled in pairs to NOR gates 55, 56, the outputs of which are coupled to the inputs of AND gate 53. The output of AND gate 53 is coupled to a second input of AND gate 52. The output of AND gate 52 is coupled to a second input of OR gate 54. Normally, the outputs of detector 31 are low, so that the output of AND gate 53 is high and the second input of AND gate 52 is high. When enabled by the closure of switch S1, detector 31 monitors the tip and ring leads for the presence of communication signals lying within its sensitivity range. Should a superaudio signal be present within one of its detection bands, the level on one of the output lines 36-39 will change state, causing the output of one of NOR gates 55, 56 to go low and thereby disabling AND gates 53 and 52.

The Q output of flip-flop 71 is coupled through an AND gate 73 to the control lead of a line seize pass transistor of the line seize circuit within the craftsperson's test equipment 20. A second input of AND gate 73 is coupled to the control circuit within the test equipment. When flip-flop 71 is set, the test equipment is enable to seize the line. When the line is no longer seized, either through a disconnect or hang-up, the output of one of a pair of comparator circuits 81 and 82, which are coupled to the telephone line via bridge 80, will change state, causing a hard reset signal to be applied through OR gate 83, dial pulse filter 84 monostable multivibrator 86 and one input of OR gate 85 to the RESET input of flip-flop 71. Monostable multivibrator 86 only allows positive level transitions from the comparator circuits 81 and 82 to reset flip-flop 71A separate (power-on) MASTER reset is coupled through a second input of OR gate 85 to the RESET input of flip-flop 71.

In operation, when multiple band frequency detector 31 is enabled by the closure of momentary switch S1, it monitors the line for the presence of communication signals (digital data traffic) lying within a prescribed plurality of (out-of-audio) frequency bands (the 5kHz...2MHZ ranges shown). Closure of switch S1 also provides a timing pulse via delay circuit 43 to a first input of AND gate 52, to a second input of which output lines 36-39 of the frequency detector are logically coupled. Should detector 31 identify any traffic within its sensitivity range during the interval of the timing pulse provided by delay circuit 43, the logic level input to GATE 52 will go low and prevent flip-flop 71 from being set. As pointed out previously, unless flip-flop 71 is set, the line cannot be seized by the test equipment.

Assuming that the telephone line is free of above audio band traffic, then once the output voltage of timing pulse circuit 43 reaches the logic threshold of AND gate 52, its output goes high, setting flip-flop 71 and causing the generation of a test set enabling signal at its Q output. The test set enabling signal is normally coupled through AND gate 73 to a 'line-seize' transistor circuit (not shown) within test set 20, so as to normally prevent the craftsperson from directly seizing the line and thereby potentially corrupting data traffic. Flip-flop 71 remains set until the line is no longer seized by the test equipment. Namely, upon disconnect or hang-up, one of comparators 81, 82 will trigger, thereby resetting flip-flop 71 and terminating the line seize enable signal at its Q output.

To initiate the override feature, the craftsperson closes switches S1 and S2 simultaneously, thereby enabling both inputs of AND gate 51. Regardless of the presence or absence of high frequency traffic (as monitored by detector 31), a set logic level is coupled from AND gate 51 through OR gate 54 to the SET input of flip-flop 71.

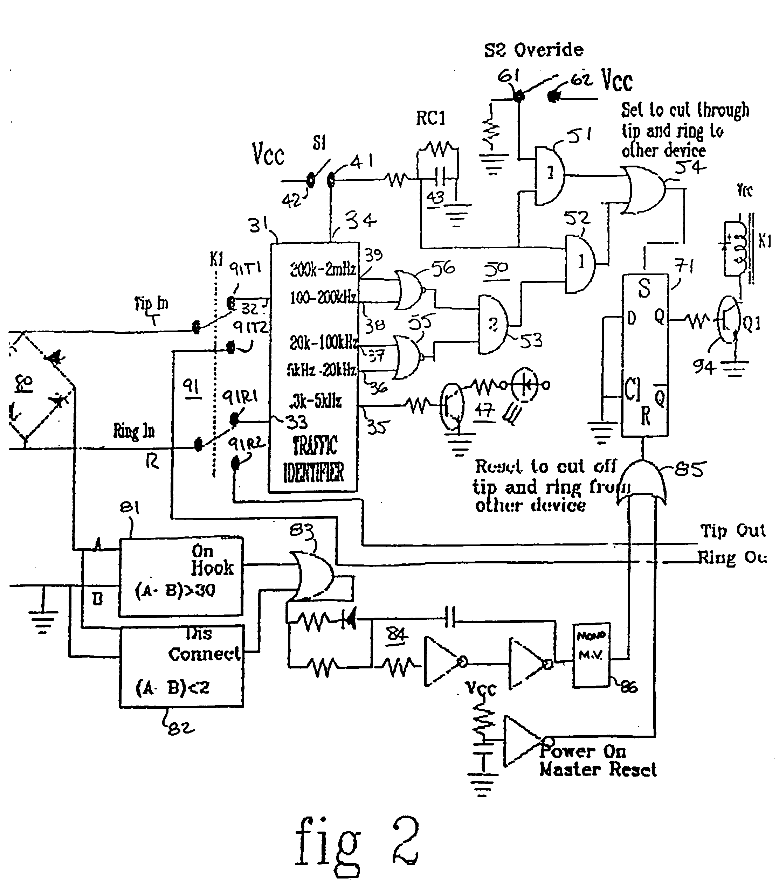

In accordance with a second embodiment of the invention, shown in Figure 2, frequency detector 31 may be coupled to the telephone line through the normally closed contacts 91T1 and 91R1 of an auxiliary relay circuit 91. Normally open contacts 91T2 and 91R2 are coupled by way of Tip and Ring output lines 92T and 92R to auxiliary test equipment. The Q output of flip-flop 71 is coupled to a drive transistor 94 for actuating relay circuit 91 and thereby changing the connections of the relay contacts. Operation of this embodiment of the invention is substantially the same as that described above. If, after closure of switch S1, none of the outputs of frequency detector 31 goes high, flip-flop 31 is set, thereby turning on drive transistor 94 and energizing relay 91, so as to couple the telephone line to the auxiliary equipment.

As will be appreciated from the foregoing description, the potential for corruption of high frequency, out-of-band data traffic, that may be present on a telephone line, by the direct interfacing (low impedance mode bridging) of a craftsperson's test equipment to the line is obviated in accordance with the present invention by a protective interlock circuit, which tests the line for such traffic and prevents the test set from seizing the line if data traffic is present. Full supervisory capability is also afforded by means of an override switch circuit, that enables a craftsperson to seize the line regardless of the presence of data traffic.

While we have shown and described several embodiments in accordance with the present invention, it is to be understood that the same is not limited thereto but is susceptible to numerous changes and modifications as known to a person skilled in the art, and we therefore do not wish to be limited to the details shown and described herein but intend to cover all such changes and modifications as are obvious to one of ordinary skill in the art.

## Claims

1. An interface circuit for controllably coupling a telephone line (32, 33) to line test equipment (20), characterized by:
first means (31, 50) to which a telephone line is to be coupled, for controllably monitoring said line for the presence of digital data communication signals on said line; and
second means (S1, 52, 71), coupled to said first means, for causing said first means to monitor said line for the presence of digital data communication signals on said line and, in the absence thereof, generating an output signal in response to which said line test equipment may cause said line to be seized, so that said line may be tested by said line test equipment.

2. An interface circuit according to claim 1, wherein said first means (31, 50) controllably monitor said line for the presence of digital data communication signals lying within a frequency band and producing a detection signal in response to the presence of digital data communication signals within said frequency band, and wherein said second means (S1, 52, 71), upon said first means not having produced a detection signal, generate said output signal for enabling said line test equipment to seize said line, so that said line may be tested by said line test equipment.

3. An interface circuit according to claim 1 or 2, wherein said first means (31, 50) controllably monitor said line for the presence of digital data communication signals on said line without seizing said line, and wherein said second means (S1, 52, 71) provide an output signal to said line test equipment indicative of whether or not said line may be seized by said line test equipment and tested thereby in dependence upon whether or not digital data communication signals are detected by said first means as being present on said line.

4. An interface circuit according to claim 1 or 3, wherein said first means (31, 50) comprises means for monitoring said line for the presence of said digital data communication signals in a prescribed frequency band and providing an output in response to the presence of said digital data communication signals in said prescribed frequency band.

5. An interface circuit according to claim 4, wherein said first means (31, 50) is operative, in the absence of digital communication signals on said line, to generate said output signal in response to which said line test equipment (20) is operative to cause said line to be seized.

6. An interface circuit according to claim 4 or 5, wherein said second means comprises switch means (S1) for generating an enabling signal in response to which said first means (31, 50, 71) is enabled to monitor said line and gate means (52) coupled to receive said enabling signal and the output of said first means and generating said output signal after the generation of said enabling signal by said switch means in the absence of digital data communication signals on said line, but otherwise preventing the generation of said output signal.

7. An interface circuit according to claim 2, wherein said second means comprises switch means (S1) for generating a first enabling signal in response to which said first means (31, 50) is enabled to monitor said line, and gate means (52), coupled to said first means and responsive to said first enabling signal, for generating said output signal in the absence of the production of a detection signal by said first means, but otherwise preventing the generation of said output signal.

8. An interface circuit according to claim 6 or 7, wherein said second means comprises means (71) for maintaining the generation of said output signal until the line is no longer seized by said test equipment.

9. An interface circuit according to claim 1 to 3, further including third means (73) for controllably coupling said test equipment to said line in response to said second means generating said output signal.

10. An interface circuit according to claim 9, wherein said second means comprises means (71) for providing said output signal until the line is no longer seized by said test equipment and thereafter controllably decoupling said test equipment from said line.

11. An interface circuit according to one of claims 1 to 3, further comprising third means (S2) for causing said second means to generate said output signal irrespective of the operation of said first means.

12. An interface circuit according to one of claims 1 to 3, wherein said second means comprises first switch means (S1) for generating a first enabling signal in response to which said first means (31, 50) is enabled to monitor said line and gate means (52) coupled to receive said first enabling signal and the output of said first means and generating said output signal after the generation of said first enabling signal by said first switch means in the absence of digital data communication signals on said line, but otherwise normally preventing the generation of said output signal.

13. An interface circuit according to claim 12, further comprising third means for causing said second means to generate said output signal irrespective of the operation of said first means, said third means including second switch means (S2) for generating a second enabling signal, and wherein said gate means includes means (51, 54), responsive to said first and second enabling signals, for causing said second means to generate said output signal.

14. A method of controllably coupling a telephone line (32, 33) to line test equipment (20), characterized by the steps of:
(a) monitoring said telephone line for the presence of digital data communication signals; and
(b) providing an output signal to said line test equipment indicative of whether or not said line may be seized by said line test equipment and tested thereby in dependence upon whether or not step (a) detects digital data communication signals as being present on said line.

15. A method according to claim 14, wherein said telephone line is monitored for the presence of digital data communication signals lying within a frequency band and producing a detection signal in response to the presence of digital data communication signals within said frequency band, and upon not having produced a detection signal, generating said output signal for enabling said line test equipment to seize said line, so that said line test equipment may test said telephone line without causing corruption of digital data communication signals that might be present on said line.

16. A method according to claim 14 or 15, wherein step (b) includes controllably causing said test equipment (20) to seize said line in response to said output signal indicating the absence of digital data communication signals on said line.

17. A method according to one of claims 14 to 16, further including the step of (c) maintaining the generation of said output signal until the line is no longer seized by said test equipment (20) and thereafter decoupling said test equipment from said line.

## Patentansprüche

1. Schnittstellenschaltung zur steuerbaren Kopplung einer Fernsprechleitung (32, 33) an eine Leitungsprüfapparatur (20), gekennzeichnet durch:
erste Mittel (31, 50), mit der eine Fernsprechleitung zu koppeln ist, um die Leitung hinsichtlich des Vorhandenseins von digitalen Datenkommunikationssignalen auf der Leitung steuerbar zu überwachen; und
zweite Mittel (S1, 52, 71), die mit den ersten Mitteln gekoppelt sind, um zu bewirken, daß die ersten Mittel die Leitung hinsichtlich des Vorhandenseins von digitalen Datenkommunikationssignalen auf der Leitung überwachen, und um bei Nichtvorhandensein derselben ein Ausgangssignal zu erzeugen, auf das hin die Leitungsprüfapparatur bewirken kann, daß die Leitung belegt wird, so daß die Leitung durch die Leitungsprüfapparatur geprüft werden kann.

2. Schnittstellenschaltung nach Anspruch 1, wobei die ersten Mittel (31, 50) die Leitung hinsichtlich des Vorhandenseins von digitalen Datenkommunikationssignalen steuerbar überwachen, die innerhalb eines Frequenzbandes liegen, und ein Detektionssignal in Reaktion auf das Vorhandensein von digitalen Datenkommunikationssignalen innerhalb des Frequenzbandes erzeugen, und wobei die zweiten Mittel (S1, 52, 71), wenn die ersten Mittel kein Detektionssignal erzeugt haben, das Ausgangssignal erzeugen, mit dem die Leitungsprüfapparatur in die Lage versetzt wird, die Leitung zu belegen, so daß die Leitung durch die Leitungsprüfapparatur geprüft werden kann.

3. Schnittstellenschaltung nach Anspruch 1 oder 2, wobei die ersten Mittel (31, 50) die Leitung hinsichtlich des Vorhandenseins von digitalen Datenkommunikationssignalen auf der Leitung steuerbar überwachen, ohne die Leitung zu belegen, und wobei die zweiten Mittel (S1, 52, 71) der Leitungsprüfapparatur ein Ausgangssignal zuführen, das indikativ dafür ist, ob die Leitung durch die Leitungsprüfapparatur belegt und durch diese in Abhängigkeit davon geprüft werden kann oder nicht, ob die ersten Mittel detektiert haben, daß digitale Datenkommunikationssignale auf der Leitung vorhanden sind oder nicht.

4. Schnittstellenschaltung nach Anspruch 1 oder 3, wobei die ersten Mittel (31, 50) Mittel beinhalten, um die Leitung hinsichtlich des Vorhandenseins von digitalen Datenkommunikationssignalen in einem vorgeschriebenen Frequenzband zu überwachen und um ein Ausgangssignal in Reaktion auf das Vorhandensein von digitalen Datenkommunikationssignalen in dem vorgeschriebenen Frequenzband bereitzustellen.

5. Schnittstellenschaltung nach Anspruch 4, wobei die ersten Mittel (31, 50) bei Nichtvorhandensein von digitalen Kommunikationssignalen auf der Leitung dahingehend in Funktion sind, daß sie das Ausgangssignal erzeugen, auf das hin die Leitungsprüfapparatur (20) dahingehend in Funktion tritt, daß sie das Belegen der Leitung veranlaßt.

6. Schnittstellenschaltung nach Anspruch 4 oder 5, wobei die zweiten Mittel Schaltmittel (S1) zum Erzeugen eines Freigabesignals, auf das hin die ersten Mittel (31, 50) in die Lage versetzt werden, die Leitung zu überwachen, und Gate-Mittel (52) beinhalten, die so angekoppelt sind, daß sie das Freigabesignal und das Ausgangssignal der ersten Mittel empfangen und das Ausgangssignal nach der Erzeugung des Freigabesignals durch die Schaltmittel bei Nichtvorhandensein von digitalen Datenkommunikationssignalen auf der Leitung erzeugen, ansonsten jedoch die Erzeugung des Ausgangssignals verhindern.

7. Schnittstellenschaltung nach Anspruch 2, wobei die zweiten Mittel Schaltmittel (S1) zur Erzeugung eines ersten Freigabesignals, auf das hin die ersten Mittel (31, 50) in die Lage versetzt werden, die Leitung zu überwachen, und Gate-Mittel (52) beinhalten, die an die ersten Mittel angekoppelt sind und auf das erste Freigabesignal ansprechen, um das Ausgangssignal bei Nichtvorhandensein der Erzeugung eines Detektionssignals durch die ersten Mittel zu erzeugen, ansonsten jedoch die Erzeugung des Ausgangssignals zu verhindern.

8. Schnittstellenschaltung nach Anspruch 6 oder 7, wobei die zweiten Mittel Mittel (71) beinhalten, welche die Erzeugung des Ausgangssignals aufrechterhalten, bis die Leitung nicht mehr durch die Prüfapparatur belegt ist.

9. Schnittstellenschaltung nach Anspruch 1 bis 3, die des weiteren dritte Mittel (73) zur steuerbaren Ankopplung der Prüfapparatur an die Leitung in Reaktion darauf beinhalten, daß die zweiten Mittel das Ausgangssignal erzeugen.

10. Schnittstellenschaltung nach Anspruch 9, wobei die zweiten Mittel Mittel (71) zur Bereitstellung des Ausgangssignals beinhalten, bis die Leitung nicht mehr durch die Prüfapparatur belegt ist, und zur anschließenden steuerbaren Entkopplung der Prüfapparatur von der Leitung.

11. Schnittstellenschaltung nach einem der Ansprüche 1 bis 3, die des weiteren dritte Mittel (S2) beinhaltet, um zu bewirken, daß die zweiten Mittel das Ausgangssignal unabhängig vom Betrieb der ersten Mittel erzeugen.

12. Schnittstellenschaltung nach einem der Ansprüche 1 bis 3, wobei die zweiten Mittel erste Schaltmittel (S1) zum Erzeugen eines ersten Freigabesignals, auf das hin die ersten Mittel (31, 50) in die Lage versetzt werden, die Leitung zu überwachen, und Gate-Mittel (52) beinhalten, die so angekoppelt sind, daß sie das erste Freigabesignal und das Ausgangssignal der ersten Mittel empfangen und das Ausgangssignal nach der Erzeugung des ersten Freigabesignals durch die ersten Schaltmittel bei Nichtvorhandensein von digitalen Datenkommunikationssignalen auf der Leitung erzeugen, ansonsten jedoch normalerweise die Erzeugung des Ausgangssignals verhindern.

13. Schnittstellenschaltung nach Anspruch 12, die des weiteren dritte Mittel beinhaltet, um zu bewirken, daß die zweiten Mittel das Ausgangssignal unabhängig vom Betrieb der ersten Mittel erzeugen, wobei die dritten Mittel zweite Schaltmittel (S2) zur Erzeugung eines zweiten Freigabesignals beinhalten und wobei die Gate-Mittel Mittel (51, 54) beinhalten, die auf das erste und das zweite Freigabesignal ansprechen, um zu bewirken, daß die zweiten Mittel das Ausgangssignal erzeugen.

14. Verfahren zur steuerbaren Kopplung einer Fernsprechleitung (32, 33) an eine Leitungsprüfapparatur (20), gekennzeichnet durch die Schritte:
(a) Überwachen der Fernsprechleitung hinsichtlich des Vorhandenseins von digitalen Datenkommunikationssignalen; und
(b) Bereitstellen eines Ausgangssignals für die Leitungsprüfapparatur, das indikativ dafür ist, ob die Leitung durch die Leitungsprüfapparatur belegt und durch diese in Abhängigkeit davon geprüft werden kann oder nicht, ob Schritt (a) detektiert oder nicht, daß digitale Datenkommunikationssignale auf der Leitung vorhanden sind.

15. Verfahren nach Anspruch 14, wobei die Fernsprechleitung hinsichtlich des Vorhandenseins von digitalen Datenkommunikationssignalen überwacht wird, die innerhalb eines Frequenzbandes liegen und ein Detektionssignal in Reaktion auf das Vorhandensein von digitalen Datenkommunikationssignalen innerhalb des Frequenzbandes erzeugen und, wenn kein Detektionssignal erzeugt wurde, das Ausgangssignal erzeugen, um die Leitungsprüfapparatur in die Lage zu versetzen, die Leitung zu belegen, so daß die Leitungsprüfapparatur die Fernsprechleitung prüfen kann, ohne eine Verfälschung von digitalen Datenkommunikationssignalen, die möglicherweise auf der Leitung vorhanden sind, zu verursachen.

16. Verfahren nach Anspruch 14 oder 15, wobei Schritt (b) beinhaltet, daß steuerbar bewirkt wird, daß die Prüfapparatur (20) die Leitung in Reaktion auf das Ausgangssignal belegt, welches das Nichtvorhandensein von digitalen Datenkommunikationssignalen auf der Leitung anzeigt.

17. Verfahren nach einem der Ansprüche 14 bis 16, das des weiteren den Schritt beinhaltet, (c) die Erzeugung des Ausgangssignals aufrechtzuerhalten, bis die Leitung nicht mehr durch die Prüfapparatur (20) belegt wird, und die Prüfapparatur danach von der Leitung zu entkoppeln.

## Revendications

1. Circuit d'interface permettant un couplage commandé d'une ligne téléphonique (32, 33) à un équipement de test de ligne (20), caractérisé par :
un premier moyen (31, 50) auquel une ligne téléphonique doit être couplée, permettant une surveillance commandée de ladite ligne pour détecter la présence de signaux de communication de données numériques sur ladite ligne ; et
un deuxième moyen (S1, 52, 71), couplé audit premier moyen, permettant d'amener ledit premier moyen à surveiller ladite ligne pour détecter la présence de signaux de communication de données numériques sur ladite ligne et, en l'absence de ceux-ci, de générer un signal de sortie en réponse auquel ledit équipement de test de ligne peut provoquer l'acquisition de ladite ligne, de sorte que ladite ligne puisse être testée par ledit équipement de test de ligne.

2. Circuit d'interface selon la revendication 1, dans lequel ledit premier moyen (31, 50) surveille de façon commandée ladite ligne pour détecter la présence de signaux de communication de données numériques situés à l'intérieur d'une bande de fréquences et produisant un signal de détection en réponse à la présence de signaux de communication de données numériques à l'intérieur de ladite bande de fréquences, et dans lequel ledit deuxième moyen (S1, 52, 71), si ledit premier moyen n'a pas produit de signal de détection, génère ledit signal de sortie pour permettre audit équipement de test de ligne d'acquérir ladite ligne, de sorte que ladite ligne puisse être testée par ledit équipement de test de ligne.

3. Circuit d'interface selon la revendication 1 ou 2, dans lequel ledit premier moyen (31, 50) surveille de façon commandée ladite ligne pour détecter la présence de signaux de communication de données numériques sur ladite ligne sans acquérir ladite ligne, et dans lequel ledit deuxième moyen (S1, 52, 71) fournit un signal de sortie audit équipement de test de ligne qui indique que ladite ligne peut être acquise ou non par ledit équipement de test de ligne et testée selon que les signaux de communication de données numériques sont détectés ou non par ledit premier moyen sur ladite ligne.

4. Circuit d'interface selon la revendication 1 ou 3, dans lequel ledit premier moyen (31, 50) comprend un moyen permettant de surveiller ladite ligne pour détecter la présence desdits signaux de communication de données numériques dans une bande de fréquences prescrite et de fournir une sortie en réponse à la présence desdits signaux de communication de données numériques dans ladite bande de fréquences prescrite.

5. Circuit d'interface selon la revendication 4, dans lequel ledit premier moyen (31, 50) est capable de fonctionner, en l'absence de signaux de communication numériques sur ladite ligne, pour générer ledit signal de sortie en réponse auquel ledit équipement de test de ligne (20) est capable de fonctionner pour provoquer l'acquisition de ladite ligne.

6. Circuit d'interface selon la revendication 4 ou 5, dans lequel ledit deuxième moyen comprend un moyen commutateur (S1) permettant de générer un signal de validation en réponse auquel ledit premier moyen (31, 50, 71) est validé pour surveiller ladite ligne et le moyen formant porte (52) couplé pour recevoir ledit signal de validation et la sortie dudit premier moyen, et de générer ledit signal de sortie après la génération dudit signal de validation par ledit moyen commutateur en l'absence de signaux de communication de données numériques sur ladite ligne, mais empêcher sinon la génération dudit signal de sortie.

7. Circuit d'interface selon la revendication 2, dans lequel ledit deuxième moyen comprend un moyen commutateur (S1) permettant de générer un premier signal de validation en réponse auquel ledit premier moyen (31, 50) est validé pour surveiller ladite ligne et un moyen formant porte (52), couplé audit premier moyen et réagissant audit premier signal de validation, pour générer ledit signal de sortie en l'absence de la production d'un signal de détection par ledit premier moyen, mais empêcher sinon la génération dudit signal de sortie.

8. Circuit d'interface selon la revendication 6 ou 7, dans lequel ledit deuxième moyen comprend un moyen (71) permettant de maintenir la génération dudit signal de sortie jusqu'à ce que la ligne ne soit plus acquise par ledit équipement de test.

9. Circuit d'interface selon les revendications 1 à 3, comportant en outre un troisième moyen (73) permettant un couplage commandé dudit équipement de test à ladite ligne en réponse à ladite génération par ledit deuxième moyen dudit signal de sortie.

10. Circuit d'interface selon la revendication 9, dans lequel ledit deuxième moyen comprend un moyen (71) permettant de fournir ledit signal de sortie jusqu'à ce que la ligne ne soit plus acquise par ledit équipement de test puis le découplage commandé dudit équipement de test de ladite ligne.

11. Circuit d'interface selon l'une des revendication 1 à 3, comprenant en outre un troisième moyen (52) permettant de faire en sorte que le deuxième moyen génère ledit signal de sortie sans tenir compte du fonctionnement dudit premier moyen.

12. Circuit d'interface selon l'une des revendications 1 à 3, dans lequel ledit deuxième moyen comprend un premier moyen commutateur (S1) permettant de générer un premier signal de validation en réponse auquel ledit premier moyen (31, 50) est validé pour surveiller ladite ligne et ledit moyen formant porte (52) couplé pour recevoir ledit premier signal de validation et la sortie dudit premier moyen et de générer ledit signal de sortie après la génération dudit premier signal de validation par ledit premier moyen commutateur en l'absence de signaux de communication de données numériques sur ladite ligne, mais empêcher sinon normalement la génération dudit signal de sortie.

13. Circuit d'interface selon la revendication 12, comprenant en outre un troisième moyen amenant le deuxième moyen à générer ledit signal de sortie sans tenir compte du fonctionnement dudit premier moyen, ledit troisième moyen comportant un deuxième moyen commutateur (S2) permettant de générer un deuxième signal de validation, et dans lequel ledit moyen formant porte comporte un moyen (51, 54), réagissant auxdits premier et deuxième signaux de validation, amenant ledit deuxième moyen à générer ledit signal de sortie.

14. Procédé de couplage commandé d'une ligne téléphonique (32, 33) à un équipement de test de ligne (20) caractérisé par les étapes de :
a) surveillance de ladite ligne téléphonique pour détecter la présence de signaux de communication de données numériques ; et
b) fourniture d'un signal de sortie audit équipement de test de ligne indiquant si oui ou non ladite ligne peut être acquise par ledit équipement de test de ligne et testée selon que l'étape (a) détecte ou non des signaux de communication de données numériques sur ladite ligne.

15. Procédé selon la revendication 14, dans lequel ladite ligne téléphonique est surveillée pour détecter la présence de signaux de communication de données numériques à l'intérieur d'une bande de fréquences et produire un signal de détection en réponse à la présence de signaux de communication de données numériques à l'intérieur de ladite bande de fréquence, et, si aucun signal de détection n'a été produit, de générer ledit signal de sortie pour permettre audit équipement de test de ligne d'acquérir ladite ligne, de sorte que ledit équipement de test de ligne puisse tester ladite ligne téléphonique sans provoquer d'altération des signaux de communication de données numériques qui peuvent être présents sur ladite ligne.

16. Procédé selon la revendication 14 ou 15, dans lequel l'étape (b) amène de façon commandée ledit équipement de test (20) à acquérir ladite ligne en réponse au fait que ledit signal de sortie indique l'absence de signaux de communication de données numériques sur ladite ligne.

17. Procédé selon l'une des revendications 14 à 16, comportant en outre l'étape de (c) maintien de la génération dudit signal de sortie jusqu'à ce que la ligne ne soit plus acquise par ledit équipement de test (20) puis découplage dudit équipement de test de ladite ligne.
